Europäisches Patentamt

(19) European Patent Office

Office européen des brevets

(11) Publication number: **0 378 214**
**A1**

## (12) EUROPEAN PATENT APPLICATION

(21) Application number: **90100529.8**

(22) Date of filing: **11.01.90**

(51) Int. Cl.⁵: **G11B 5/23, G11B 5/235,**
**G11B 5/193, G11B 5/127**

(30) Priority: **13.01.89 JP 6547/89**

(43) Date of publication of application:
**18.07.90 Bulletin 90/29**

(84) Designated Contracting States:
**DE FR GB**

(71) Applicant: **SANYO ELECTRIC CO., LTD.**
**18, Keihanhondori 2-chome**
**Moriguchi-shi Osaka-fu(JP)**

(72) Inventor: **Ogura, Takashi**
**c/o Hourai-ryo, 2-8-1 Hourai**
**Daito-shi, Osaka-fu(JP)**
Inventor: **Shimizu, Yoshiaki**
**3-35-4 Gein**
**Mino-shi, Osaka-fu(JP)**
Inventor: **Okuda, Hiroyuki**
**3-2-605 Hino**

**Daito-shi, Osaka-fu(JP)**
Inventor: **Yamano, Takao**
**No. 902 Tsuin Furattsu, 2-7-12 Suminodo-cho**
**Daito-shi, Osaka-fu(JP)**
Inventor: **Ino, Kazuo**
**No. 905, 3-5-17 Higashishinmachi**
**Matsubara-shi, Osaka-fu(JP)**
Inventor: **Ishihara, Kousou**
**1-14-41 Hino**
**Daito-shi, Osaka-fu(JP)**
Inventor: **Shimizu, Tsukasa**
**No. B302 Obata Kopo, 2-47-1 Obata-cho**
**Yao-shi, Osaka-fu(JP)**

(74) Representative: **Glawe, Delfs, Moll & Partner**
**Patentanwälte**
**Postfach 26 01 62 Liebherrstrasse 20**
**D-8000 München 26(DE)**

(54) **Magnetic head.**

(57) In a magnetic head, a pair of magnetic core halves (9a, 9b) are opposed to each other with a non-magnetic material (13) such as $SiO_2$ interposed therebetween to form a magnetic gap (12), the magnetic head having a pair of magnetic core halves (9a, 9b), interposed thin films (10) and ferromagnetic thin films (11). The magnetic core halves (9a, 9b) are formed of ferromagnetic oxide such as ferrite, and they have gap forming faces to be opposed to each other to form the magnetic gap (12). The interposed thin films (10) are formed of minute crystal grains such as $SiO_2$ on the gap forming faces. The ferromagnetic thin films (11) formed of ferromagnetic metal material such as sendust are formed on the interposed thin films (10). The ferromagnetic thin films (11) have crystal grains grown directly from the surface of the interposed thin films (10). Preferably, the ferromagnetic thin films (11) are polycrystalline substance having crystal grains with at least one of {110} face, {200} face and {211} face as a face approximately parallel to the gap forming faces. By the existence of the interposed thin films (10), the initial layer of ferromagnetic thin films can be prevented from being turned into amorphous, which was the cause of the pseudo gap generation.

FIG.5

## Magnetic Head

### CROSS-REFERENCE TO RELATED COPENDING APPLICATION

The present application is related to a copending US application serial No. 218,018 filed on July 12, 1988, owned by the same assignee.

### BACKGROUND OF THE INVENTION

#### Field of the Invention

The present invention relates to a magnetic head and, more specifically, to a magnetic head used in a magnetic recording and reproducing apparatus such as a video tape recorder (VTR) or a digital audio tape recorder (DAT).

#### Description of the Background Art

In recent years, there has been an increasing tendency to higher density of recorded signals in a magnetic recording and reproducing apparatus such as a VTR or a DAT. Metal tapes of high coersive force formed by using ferromagnetic metal powder such as Fe, Co or Ni as magnetic powder have been used for such high-density recording. For example, metal tapes having a high coersive force, Hc = about 1400 to 1500 oersteds are used for small-sized VTRs known as 8mm video tape recorders. This is because a recording medium making it possible to shorten wavelength of recorded signals is required for the necessity of increasing recording density to reduce the size of the magnetic recording and reproducing apparatus.

Meanwhile, if a conventional magnetic head made only of ferrite is used for recording on the metal tape, a magnetic saturation phenomenon occurs, because a saturation flux density of ferrite is only 5500 gauss at most, and accordingly, optimum performance of the metal tape cannot be achieved. A magnetic head adapted for a metal tape having a high coersive force needs to have a high saturation flux density in the vicinity of a gap of a magnetic core, other than high-frequency characteristics and abrasion resistance of the magnetic core as generally required for magnetic heads. In order to satisfy such requirements, it is proposed to use, as a magnetic head adapted for a metal tape, a magnetic head made of a metallic magnetic material such as permalloy, sendust or amorphous magnetic material having a large saturation magnetization than that of ferrite used for a magnetic core (such a magnetic head being hereinafter referred to as a composite type magnetic head or MIG (Metal In Gap)). Such a composite type magnetic head has excellent characteristics in reliability, magnetic properties, abrasion resistance and the like.

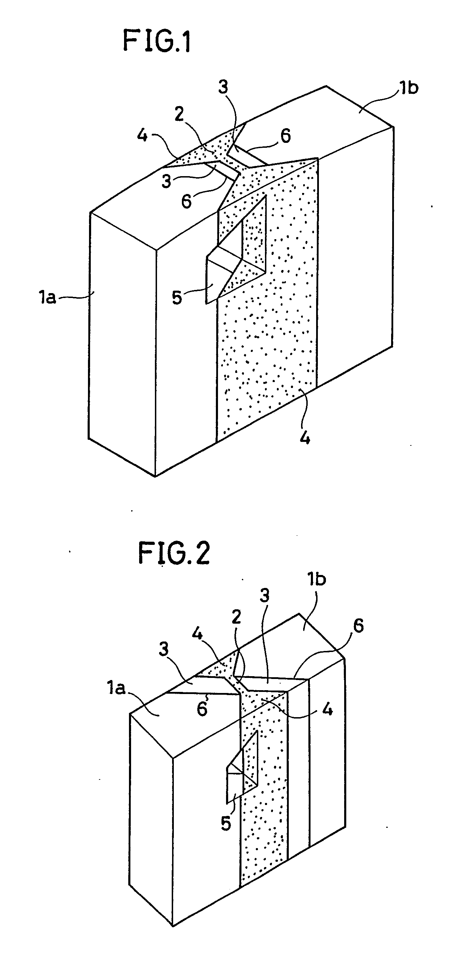

Fig. 1 is a perspective view showing an appearance of a conventional magnetic head. As shown in Fig. 1, a pair of magnetic core halves 1a and 1b made of a ferromagnetic oxide such as Mn-Zn ferrite are opposed to each other through a non-magnetic material with a magnetic gap 2 being provided therebetween, and thin films of a magnetic material such as sendust are formed near the magnetic gap 2. The magnetic core halves 1a and 1b are joined by glass 4 with a coil groove 5 being provided.

In the composite type magnetic head thus provided, the thin films 3 of the ferromagnetic metal are deposited by sputtering on upper surface areas of the base of the ferromagnetic oxide where mirror surface finishing has been applied. However, junction regions between the thin films of the ferromagnetic metal and the base of the ferromagnetic oxide are non-magnetized due to interdiffusion and chemical reactions of constituent elements, or irregular arrangement in crystal structure. As a result, those regions function as pseudo gaps, exerting adverse effect on the performance of the magnetic head.

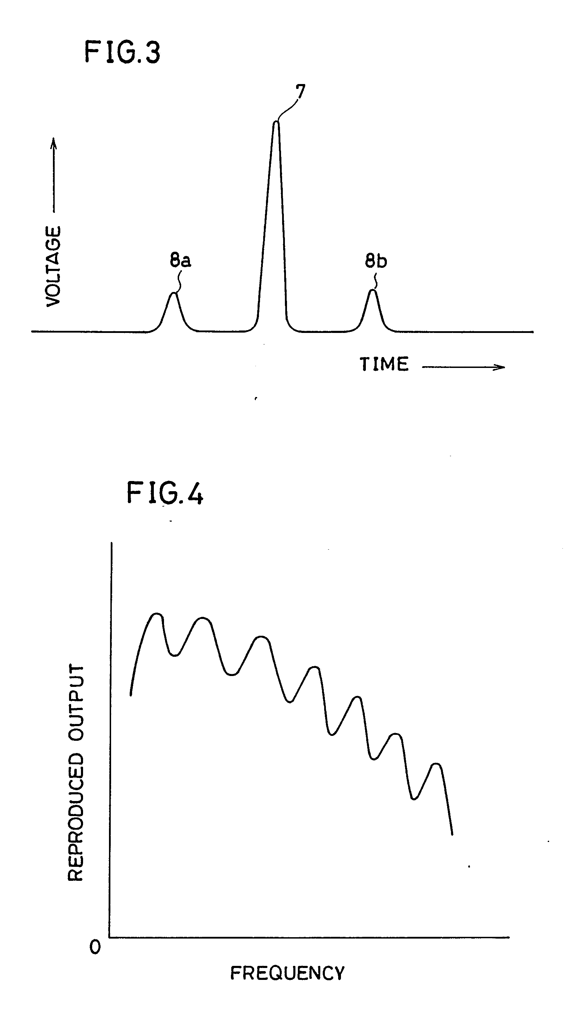

More specifically, as shown in Fig. 1, pseudo gaps are formed on boundary faces 6 between the magnetic core halves 1a and 1b and the thin films 3 of the ferromagnetic metal, respectively, other than the prescribed magnetic gap 2. If a singly reverse-magnetized recorded signal on a magnetic tape is reproduced by using the magnetic head having boundary faces where such pseudo gaps are formed as shown in fig. 3, pseudo signals 8a and 8b are reproduced with deviations of time $\tau = t/v$ before and after reproduction of the prescribed signal 7. In the equation, t represents a thickness of each of the ferromagnetic metal thin film 3 in the relative travelling direction defined between the head and the tape, and v represents a relative travelling speed defined between the head and the tape.

On the other hand, if continuously reverse-magnetized recorded signals having a recorded wavelength substantially equal to or shorter than t are reproduced, the pseudo signals 8a and 8b as shown in Fig. 3 can not be readily observed. However, if the frequency characteristics of the reproduced output are measured, a frequency characteristic curve which waves with peaks at fre-

quency satisfying $f = n \cdot (v/t)$ and bottoms at a frequency satisfying $f = (n-1/2) \cdot (v/t)$, where f indicates frequency $(v/\lambda)$ and n indicates a natural number, is obtained as shown in Fig. 4 by superposition of the reproduced output through the pseudo gaps onto the reproduced output through the prescribed magnetic gap 2. Accordingly, if a magnetic head having boundary faces 6 where such pseudo gaps are formed is used for a VTR or DAT, pseudo signals due to the pseudo gaps cause noises, resulting in a deterioration of the quality of the picture or adverse effects on the performance of the magnetic head, such as increase of an error rate. Particularly, in the case of using a magnetic head having a magnetic gap 2 parallel to the boundary faces 6 where such pseudo gaps as shown in Fig. 1 are generated, a waving phenomenon in the frequency characteristics of the reproduced output is observed and the S/N ratio is deteriorated.

In order to suppress generation of such pseudo gaps, it is proposed to adapt a method for applying reverse sputtering to a surface of a base member of ·a ferromagnetic oxide such as ferrite under suitable power supply conditions immediately before formation of the thin films of ferromagnetic metal, as disclosed, for example, in Japanese Patent Laying-Open No. 62-57115. However, even this method can not completely remove portions adversely affected by the treating process of the thin film which would cause the pseudo gaps, and accordingly this method is not sufficiently effective for preventing generation of pseudo gaps.

Further, as shown in Fig. 2, a composite type magnetic head is proposed in which boundary faces 6 between magnetic core halves 1a and 1b and thin films 3 of ferromagnetic metal, respectively have an inclination and are not parallel to the faces forming the magnetic gap 2, causing no adverse effect to the performance of the head even if the pseudo gaps are generated. However, the magnetic head having such structure is not suited for mass production because the manufacturing process thereof is complicated and the manufacturing cost comes to be high compared with the magnetic head having the boundary faces 6 parallel to the magnetic gap 2 as shown in Fig. 1.

The inventors of the present invention have been interested in the following three points as causes of pseudo gap generation of the magnetic head having the parallel type MIG (Metal In Gap) structure shown in Fig. 1.

(i) deterioration of crystallinity of the surface of the base formed of ferromagnetic oxide such as ferrite.

(ii) turning into amorphous of the initial layer of the ferromagnetic thin film formed of ferromagnetic metal material such as sendust.

(iii) diffusion or chemical reaction at the junction region between the thin films of ferromagnetic metal and the base formed of ferromagnetic oxide.

The inventors of the present invention have invented and disclosed a magnetic head capable of preventing the above described causes (i) and (iii) of the pseudo gap generation and manufacturing method thereof in Japanese Patent Laying-Open No. 62-175157 filed on July 14, 1987, Japanese Patent Laying-Open No. 62-194893 filed on August 4, 1987 and in USSN 218,018 claiming priorities based on the above mentioned Japanese applications.

SUMMARY OF THE INVENTION

An object of the present invention is to provide a magnetic head which makes it possible to effectively suppress generation of pseudo gaps in junction regions between magnetic core halves and thin films of ferromagnetic metal, or to effectively prevent the junction regions from exerting adverse effect as a result of function as pseudo gaps.

The magnetic head in accordance with the present invention has a pair of magnetic core halves opposed to each other with a non-magnetic material interposed therebetween to form a magnetic gap, which comprises a pair of magnetic core halves, interposed thin films and ferromagnetic thin films. The pair of magnetic core halves are formed of ferromagnetic oxide and have gap forming faces to be opposed to each other for forming the magnetic gap. The interposed thin films are formed on the gap forming faces and formed of minute crystal grains. The ferromagnetic thin films are formed of ferromagnetic metal material on the interposed thin films. The ferromagnetic thin films are thin films having crystal grains grown immediately on the surface of the interposed thin films.

In a preferred embodiment of the magnetic head of the present invention, the ferromagnetic thin film is a polycrystalline substance including crystal grains having at least one of {110} face, {200} face and {211} face as a face approximately parallel to the gap forming face. More preferably, the ferromagnetic thin film is a polycrystalline substance including crystal grains having {110} face, crystal grains having {200} face and crystal grains having {211} face as the faces approximately parallel to the gap forming face. Preferably, the thickness of the interposed thin film is not less than 1nm and not more than 1/10 of the thickness of the magnetic gap. The minute crystal grains may be formed of non-magnetic oxide such as silicon oxide. The ferromagnetic metal material may include sendust, and the ferromagnetic oxide forming the magnetic core halves may include ferrite.

When a ferromagnetic thin film is formed on the gap forming face formed of ferromagnetic oxide, the initial layer of film formation may possibly be a deteriorated magnetic layer having irregular atomic arrangement, due to the irregular arrangement of the crystal structure with the underlying face. In the magnetic head of the present invention, a thin film formed of minute crystal grains is interposed between each of the magnetic core halves formed of ferromagnetic oxide and the ferromagnetic thin film. The thin film formed of minute crystal grains has the effect of intercepting adverse effect of the atomic arrangement of the surface of the magnetic core halves formed of ferromagnetic oxide on the formation of the initial layer of the ferromagnetic metal thin films. Consequently, the ferromagnetic metal thin film formed on the thin film of minute crystal grains grows as a film having inherent crystal structure from the very beginning of formation thereof. Accordingly, the deteriorated magnetic layer having irregular atomic arrangement is not formed in the initial layer of the ferromagnetic thin film, and the cause of pseudo gap generation can be removed. Consequently, deterioration of the reproduced output from the magnetic head caused by the pseudo gaps can be suppressed.

Namely, according to the present invention, the initial layer of the thin film formed of ferromagnetic metal can be prevented from being turned into amorphous, which was the cause of pseudo gap generation, by forming thin films of minute crystal grains on the gap forming faces formed of ferromagnetic oxide.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Figs. 1 and 2 are perspective views showing appearances of conventional magnetic heads;

Fig. 3 is a diagram showing a reproduced signal through a magnetic gap and reproduced signals through pseudo gaps;

Fig. 4 is a graph showing frequency characteristics of an output by a conventional magnetic head;

Fig. 5 is a perspective view showing an appearance of the magnetic head of the present invention;

Fig. 6 is a plan view showing a tape contact face of the magnetic head shown in Fig. 5;

Fig. 7 is a schematic diagram showing a sputtering apparatus used for sputtering in film formation or for reverse sputtering, in manufacturing the magnetic head of the present invention;

Figs. 8A, 8B, 9A, 9B, 10A, 10B and 11 are perspective views specifically showing steps of manufacturing the magnetic head in accordance with one embodiment of the present invention;

Fig. 12 shows X-ray diffraction patterns of the ferromagnetic metal thin films of respective film thicknesses formed with the thin film of minute crystal grain interposed;

Fig. 13 shows a X-ray diffraction pattern of the ferromagnetic metal thin films of respective film thicknesses without the thin film of minute crystal grains interposed, for comparison with the present invention;

Fig. 14 schematically shows crystal structure of the ferromagnetic metal thin film formed with the thin film of minute crystal grains interposed, in accordance with the present invention;

Fig. 15 schematically shows crystal structure of the ferromagnetic thin film formed without the thin film of minute crystal grains interposed, for comparison with the present invention;

Fig. 16 shows frequency characteristics of the reproduced output measured through the magnetic head having the ferromagnetic metal thin film formed with the thin film of minute crystal grains interposed, in accordance with the present invention;

Fig. 17 shows frequency characteristics of the reproduced output measured through the magnetic head having the ferromagnetic metal thin film formed without the thin film of minute crystal grains interposed, for comparison with the present invention;

Fig. 18 shows a result of measurement of the surface roughness of the ferrite base, with the ferromagnetic metal thin film, which is formed with the thin film of minute crystal grains interposed in accordance with the present invention, being removed by ion beam etching; and

Fig. 19 shows a result of measurement of the surface roughness of the ferrite base, with the ferromagnetic metal thin film, which is formed without the thin film of minute crystal grains interposed, being removed by ion beam etching, for comparison with the present invention.

## DESCRIPTION OF THE PREFERRED EMBODIMENTS

One embodiment of the present invention will be described in detail with reference to the figures.

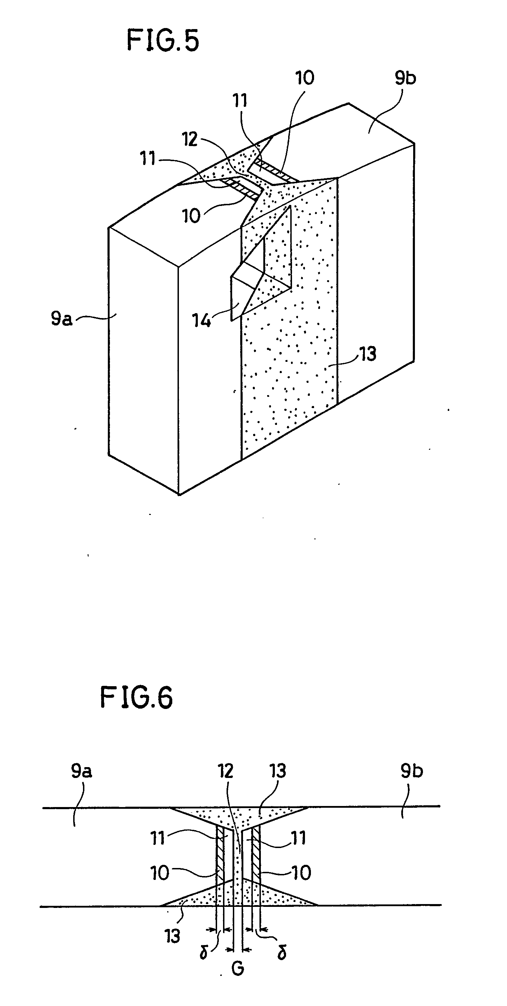

Referring to Fig. 5, thin films 10 of minute crystal grains are formed on the gap forming faces of the magnetic core halves 9a and 9b formed of ferromagnetic oxide such as Mn-Zn single crystal or polycrystalline ferrite, Ni-Zn single crystal or polycrystalline ferrite, or ferroxplana. The thin films 10 of minute crystal grains are thin films having minute crystal grains nearly with the nature of amorphous, formed to have the thickness of about several nm to several 10 nm by vapor quenching method such as sputtering, using the following materials.

(a) semimetal such as Si, Ge or oxide or nitride thereof

(b) oxide or nitride of low melting metal such as Mg, Aℓ, Zn

(c) metal having high melting point such as Ti, Cr, Zr, Mo, Ta, W or oxide or nitride thereof

(d) alloy including the metal having high melting point listed above (c) or oxide or nitride thereof

The gap forming face on which the thin film 10 of minute crystal grains is to be formed should have the surface where the crystals of the ferromagnetic oxide constituting each of the magnetic core halves 9a and 9b exposed at least by etching or by etching followed by reverse sputtering for cleaning. A thin film 11 of ferromagnetic metal formed of polycrystalline substance such as sendust alloy, permalloy, Fe-Aℓ alloy, Fe-Co alloy, Fe-Si alloy, Fe-C alloy or the like is formed by sputtering on the thin film 10 of minute crystal grains. The magnetic gap 12 positioned between the thin films 11 of ferromagnetic metal is formed of non-magnetic thin film such as $SiO_2$, $TiO_2$, $Aℓ_2O_3$, $Ta_2O_5$, Ti or Cr. The magnetic core halves 9a and 9b are joined by glass 13. A coil winding groove 14 is formed in the magnetic core halves 9a and 9b joined by glass 13.

Referring to Fig. 6, preferably, the thickness of the thin film 11 of the ferromagnetic metal is 1 to 10μm, the thickness G of the magnetic gap 12 is 0.1 to 1μm and more preferably, 0.2 to 0.4μm, the thickness δ of the thin film 10 of minute crystal grains is not less than 1nm and not more than 1/10 of the thickness G of the magnetic gap.

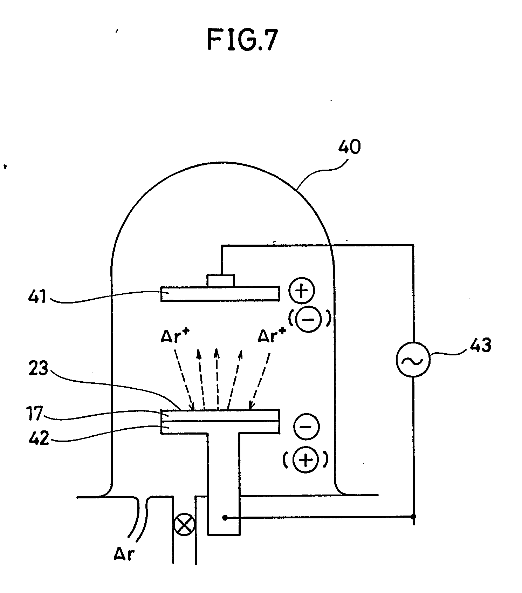

One embodiment of the method of manufacturing the magnetic head in accordance with the present invention will be described in the following. First, the upper surface which will be the gap forming face of the base formed of Mn-Zn single crystal ferrite is mirror polished by using abrasive grains of diamond or the like. Thereafter, portions adversely effected during polishing on the upper surface of the base are removed by etching with phosphoric acid solution or the like. The ferrite base 17 having the etched gap forming face is set in a sputtering apparatus which is kept high vacuum, as shown in Fig. 7. By the reverse sputtering of the gap forming face by ions of inert gas such as Ar⁺ generated by glow discharge, impurities sticking on the upper surface of the ferrite base 17 are removed. Referring to Fig. 7, the ferrite base 17 is attached on a second plate 42 set at a negative potential, while the first plate 41 is set at a positive potential. Inert gas such as Ar or He is introduced in a container 40, and a high frequency power is applied from an external AC power supply 43 to the first and second plates 41 and 42. In this manner, reverse sputtering process is carried out on the gap forming face 23 of the ferrite base 17 set in the sputtering apparatus.

Thereafter, thin film of minute crystal grains formed of $SiO_2$ is formed by sputtering on the gap forming faces of the ferrite base, and a ferromagnetic metal thin film formed of sendust is formed by sputtering on the thin film of minute crystal grains.

The steps of forming the thin film of minute crystal grains and of forming a thin film of ferromagnetic metal are carried out by the sputtering apparatus shown in Fig. 7. The second plate 42 on which the ferrite base 17 is set is set at a positive potential. The first plate 41 is set to a negative potential, on which a target formed of sendust as an example of the ferromagnetic metal material, or $SiO_2$ as an example of the material constituting the thin film of minute crystal grains is attached. The thin film of minute crystal grains formed of $SiO_2$ is formed to have the thickness of about 5nm by sputtering on the upper surface of the ferrite base 17.

The ferromagnetic metal thin film of sendust is formed by sputtering to have the thickness of about 3μm on the thin film of minute crystal grains. A non-magnetic thin film of $SiO_2$ is formed to have the thickness of about 0.1μm, constituting the magnetic gap, on the ferromagnetic metal thin film.

The conditions of forming ferromagnetic metal thin film are, for example, as follows. When a high frequency magnetron sputtering apparatus is used, a ferrite wafer is arranged opposed to a target of sendust alloy. The container 40 is evacuated to high vacuum of no higher pressure than $5×10^{-6}$ Torr. RF (Radio Frequency) discharge is done at the power supply of 500W in the Ar gas atmosphere with the pressure $5×10^{-3}$ Torr, whereby film formation by sputtering is carried out. Generally, the sendust film formed by sputtering must be subjected to thermal processing so as to provide superior soft magnetic properties. The thermal processing is carried out at the step of applying melt glass for joining the magnetic core halves during the manufacturing of the magnetic head which is the object of the present invention.

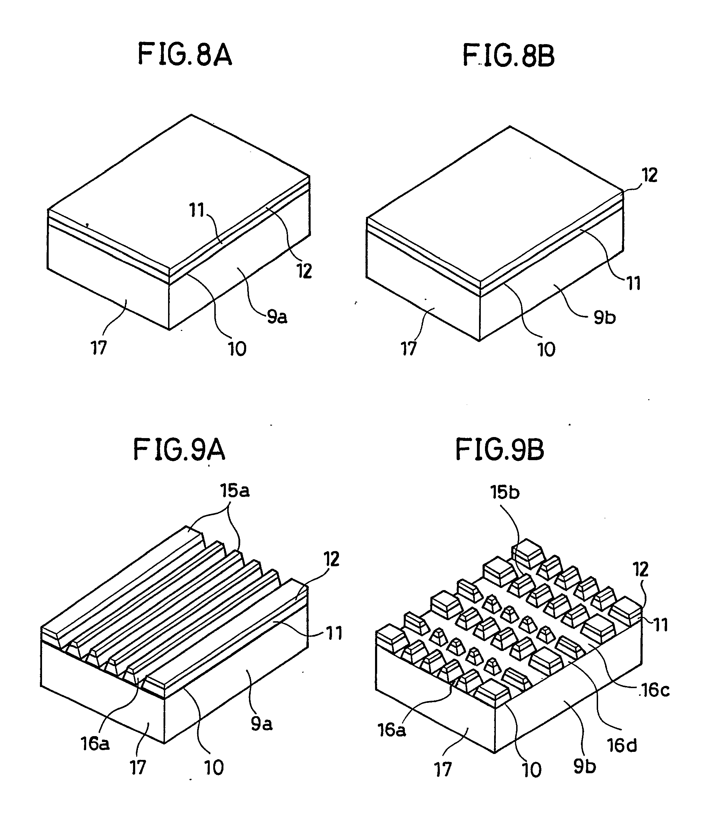

Figs. 8A and 8B show magnetic core half members 9a and 9b, on each of which formed the thin film 10 of minute crystal grains, the ferromagnetic metal thin film 11 and the non-magnetic thin film 12 constituting the magnetic gap formed in this order on the upper surface of the ferrite base 17 through the above described steps.

Referring to Figs. 9A and 9B, track width defining grooves 16a, 16b, 16c and 16d are formed by ion beam etching or the like so as to leave portions 15a and 15b corresponding to the track width opposing to each other at the gap on the upper surfaces of the magnetic core half members 9a and 9b.

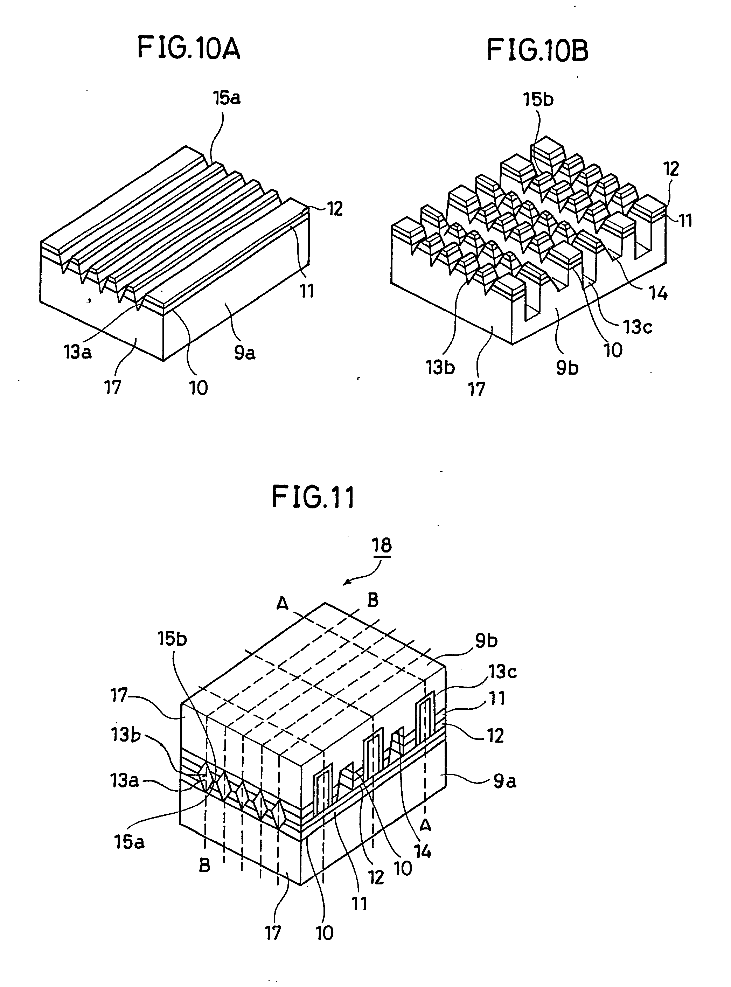

Thereafter, as shown in Fig. 10A and 10B, grooves 13a and 13b in which glass for joining the magnetic core half members is filled, the coil winding groove 14 and a groove 13c for inserting glass bar are formed on the upper surface of the ferrite base 17 by using a rotating grindstone or the like. Thereafter, a glass bar is inserted through the glass bar inserting groove 13c with the gap corresponding portions of the magnetic core half members 9a and 9b opposed to each other, and the members are pressed and heated, whereby a block with the magnetic core half members 9a and 9b joined by glass is formed.

In this manner, the block 18 shown in Fig. 6 is completed. The block 18 is cut along the line A-A into core blocks and the tape contact face of each of the core blocks is polished to be a round. Thereafter, each of the cut core blocks is sliced along the line B-B, whereby the magnetic head 10 of the present invention shown in Fig. 5 is completed.

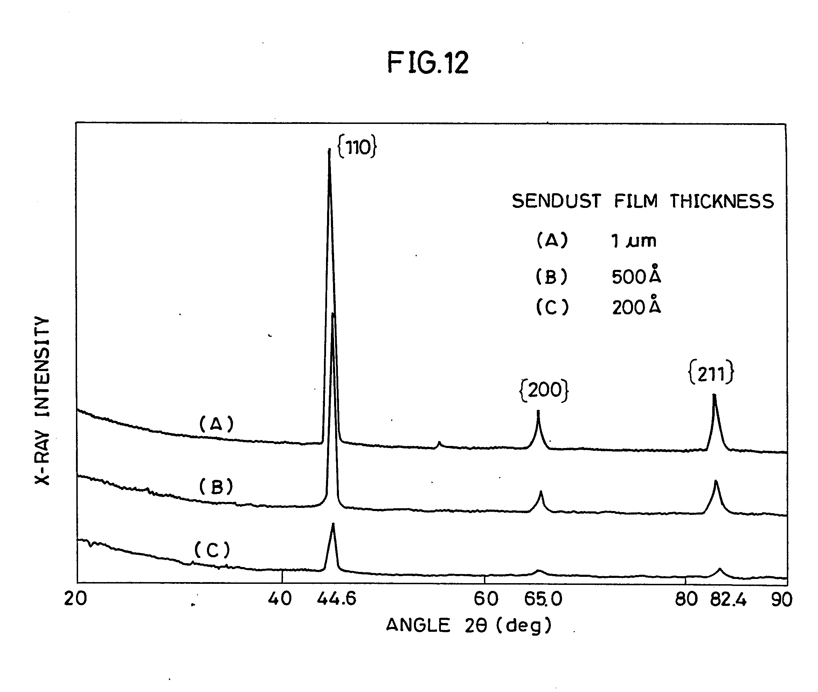

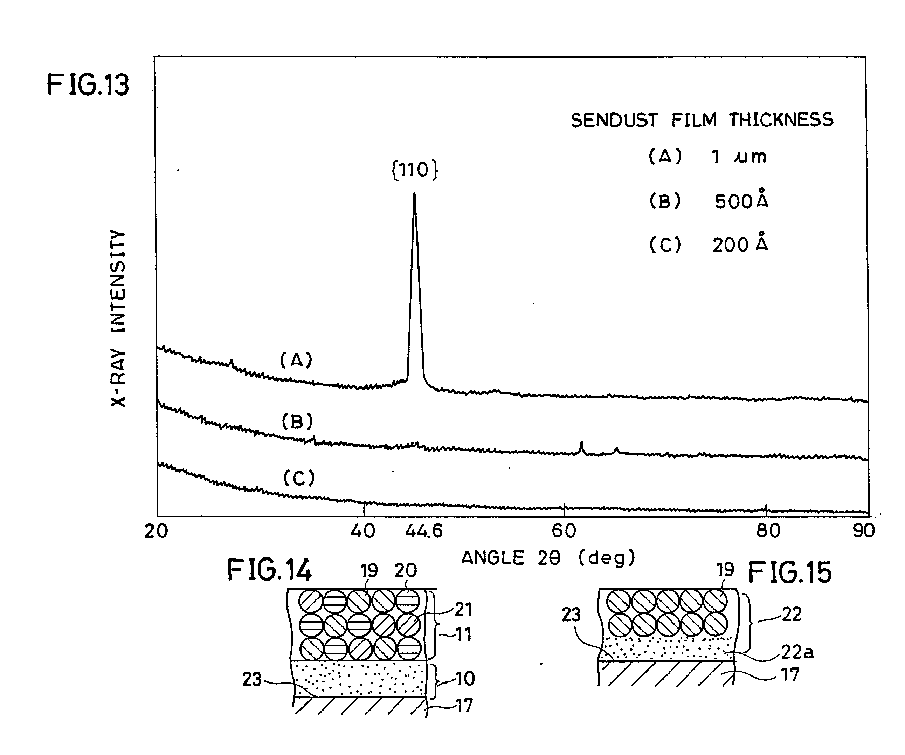

In accordance with the manufacturing method of the above described embodiment, a thin film 10 of minute crystal grains of $SiO_2$ is opposed on the gap forming face 23 of the base 17 formed of Mn-Zn single crystal ferrite, and a ferromagnetic metal thin film 11 of sendust is formed thereon, as shown in Fig. 14. Fig. 12 shows X-ray diffraction patterns using $CuK\alpha$ ray at respective film thicknesses of the ferromagnetic metal thin film 11. The gap forming face 23 is the {100} face of the Mn-Zn single crystal ferrite.

According to the X-ray diffraction patterns shown in Fig. 12, peaks are detected at the angles 44.6° (about 45°), 65.0° (about 65°) and 82.4° (about 82°) indicating that the faces parallel to the gap forming face 23 of the ferrite base 17 which is the underlying layer for film formation are {110} face, {200} face and {211} face of a body-centered cubic crystal in the sendust constituting the ferromagnetic metal thin film 11. In this case, the X-ray diffraction peaks are detected corresponding to respective crystal faces of the body-centered cubic crystal even when the ferromagnetic metal thin film of sendust having the thickness of 200Å (20nm) is formed. This means that by providing the thin film 10 of minute crystal grains of $SiO_2$ having the thickness of about 5nm, the ferromagnetic metal thin film 11 having crystallinity is formed directly from the surfaces of the thin film 10 of the minute crystal grains. As shown in Fig. 14, the ferromagnetic metal thin film 11 is constituted of polycrystalline substance of body-centered cubic crystal having the crystal orientation including crystal grains 19 with {110} faces, crystal grains 20 with {200} faces and crystal grains 21 with {211} faces as faces approximately parallel to the gap forming face 23 as the underlying surface for film formation.

For comparison, a ferromagnetic metal thin film 22 of sendust is directly formed on the {100} face as the gap forming face 23 of the base 17 of Mn-Zn single crystal ferrite without interposing the thin film of minute crystal grains, as shown in Fig. 15, by using the manufacturing method of the above described embodiment. Fig. 13 shows the X-ray diffraction pattern using $CuK\alpha$ ray at respective film thicknesses of the ferromagnetic metal thin film.

According to the X-ray diffraction patterns shown in Fig. 13, a peak is detected only at the angle 44.6° (about 45°) indicating that only the {110} face of the body-centered cubic crystal of sendust constituting the ferromagnetic metal thin film 22 is the face approximately parallel to the gap forming face 23 of the ferrite base 17 which is the underlying surface for film formation. The initial layer 22a of the ferromagnetic metal thin film 22 of sendust formed directly on the ferrite base 17 is formed as a deteriorated magnetic layer, that is, an amorphous layer, with the atomic arrangement disturbed because of irregular alignment of crystal structure with the underlying surface, as shown in Fig. 15. Therefore, when a sendust film having the thickness no more than 500Å (50nm) corresponding to the above mentioned initial layer 22a is formed, no peak corresponding to the specific crystal face is detected, as shown in Fig. 13. The existence of the amorphous layer at the boundary between the sendust/ferrite films is a cause of pseudo gap generation. Namely, the ferromagnetic metal thin film 22 formed directly on the ferrite base 17 comprises the initial layer 22a which is an amorphous layer and polycrystalline substance of body-centered cubic crystal having the crystal orientation including only the crystal grains 19 with {110} face being approximately parallel to the gap forming face 23 as the underlying layer for film formation.

In Figs. 14 and 15, the positions of the peaks shown in Figs. 12 and 13 are not changed even when the thickness of the ferromagnetic metal thin films 11 and 22 are further increased above $1\mu m$.

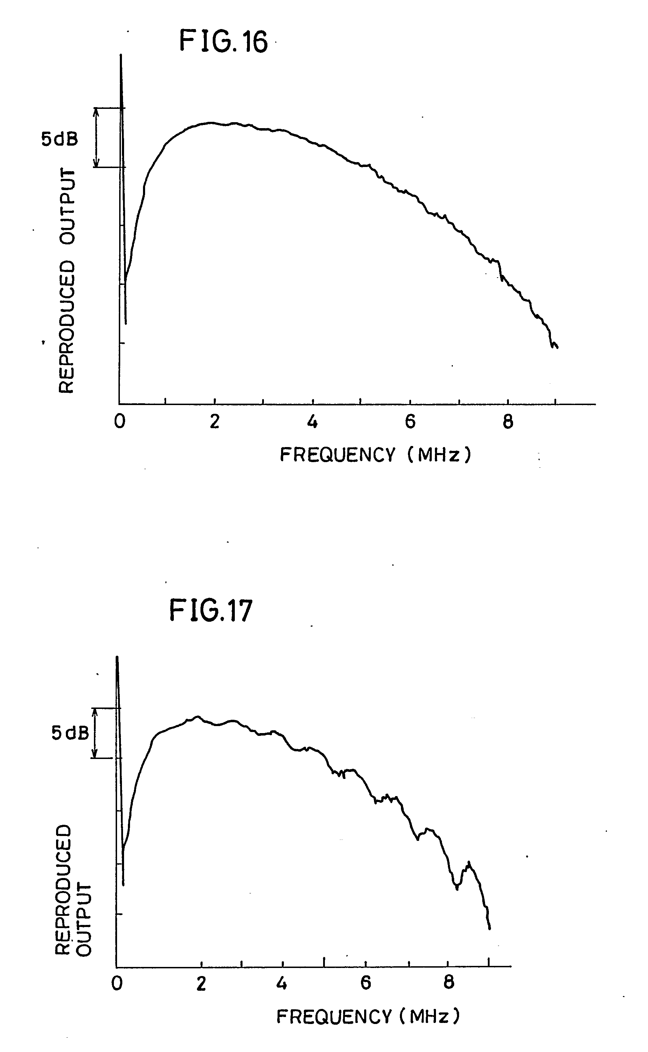

Fig. 16 shows a frequency characteristic curve of the reproduced output measured through the magnetic head of the present invention in which the sendust film is formed on the gap forming face of ferrite with the $SiO_2$ film interposed therebetween. Fig. 17 shows a frequency characteristic curve of the reproduced output measured through a magnetic head in which the sendust film is formed directly on the ferrite gap forming face, for comparison. In both magnetic heads, the gap length G is 0.25μm, the thickness of the sendust film is 3μm, and the thickness of the $SiO_2$ film interposed between the ferrite and the sendust films is 50Å (5nm). The measurement of the frequency characteristic curve is carried out by using a metal tape having the coersive force Hc of about 1400 oersted (Oe), with the head-tape relative travelling speed v = 3.1m/s, frequency sweep signals of 0.1 to 10MHz being recorded, and the reproduced outputs detected by a spectrum analyzer.

As is apparent from Fig. 17, when a magnetic head on which the sendust film is directly formed on the ferrite gap forming face, the frequency characteristic of the reproduced output waves largely. On the contrary, when the magnetic head of the present invention is used, the frequency characteristic of the reproduced output hardly waves, as shown in Fig. 16. The reason for this is that the initial layer of the sendust film is prevented from being turned into amorphous, that is, a deteriorated magnetic layer, which was the cause of pseudo gap generation, since the sendust film is formed with the $SiO_2$ film interposed on the gap forming face of the ferrite.

In the magnetic head in accordance with one embodiment of the present invention, the ferromagnetic metal thin film 11 of sendust comprises three types of crystal grains 19, 20 and 21 having different crystal orientation, as shown in Fig. 14. Consequently, when ion beam etching process shown in Figs 9A and 9B is carried out during the manufacturing process described above, the surface of the ferrite base 17 exposed at the end of etching become uneven due to the difference of the etching rate of the grains 19, 20 and 21 of the ferromagnetic metal thin film 11. By detecting the unevenness during manufacturing steps, whether or not the three different crystal grains 19, 20 and 21 are included in the ferromagnetic metal thin film 11 on the ferrite base 17 can be detected.

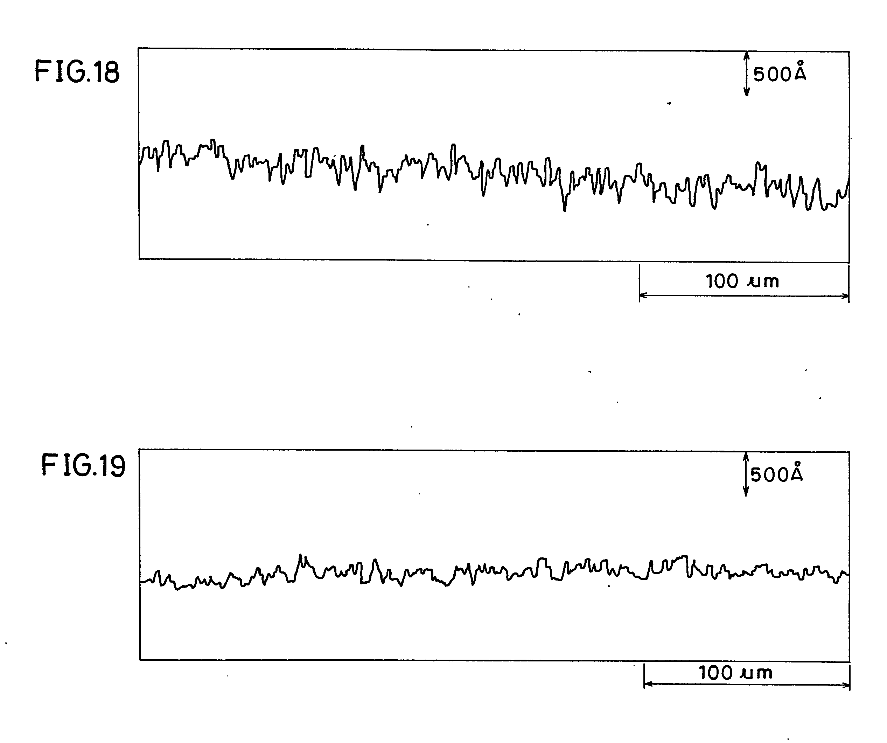

Fig. 18 shows a result of measurement of surface roughness of the ferrite base, on which the ferromagnetic metal thin film 11 of sendust is formed to have the thickness of 1μm with the thin film 10 of minute crystal grains of $SiO_2$ interposed therebetween in accordance with the above described embodiment, and the ferromagnetic metal thin film 11 is removed by ion beam etching. Fig. 19 shows a result of measurement of the surface roughness of the ferrite base 17 in which the ferromagnetic metal thin film 22 of sendust is formed to have the thickness of 1μm directly on the ferrite base 17. The ferromagnetic metal thin film 22 is removed by ion beam etching, for comparison.

Referring to these figures, the surface roughness of the ferrite base 17 is larger when the ferromagnetic metal thin film 11 is formed in accordance with the above described embodiment and thereafter it is removed by ion beam etching (Fig. 18) than the example for comparison (Fig. 19). When the magnetic head is manufactured actually, the thickness of the ferromagnetic metal thin film is not less than 1μm and the difference of surface roughness can be definitely recognized by visual observation.

As described above, according to the present invention, by forming a ferromagnetic metal thin film on a gap forming face of a magnetic core half formed of ferromagnetic oxide with a thin film of minute crystal grains interposed therebetween, the initial layer of the ferromagnetic thin film can be prevented from being turned into amorphous, which was the cause of pseudo gap generation. Consequently, deterioration of the reproduced output from the magnetic head caused by the pseudo gap can be effectively suppressed.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A magnetic head having a pair of magnetic core halves (9a, 9b) opposed to each other with a non-magnetic material (13) interposed therebetween, forming a magnetic gap (12), comprising:
a pair of magnetic core halves (9a, 9b) formed of ferromagnetic oxide having gap forming faces to be opposed to each other to form said magnetic gap (12);
interposed thin films (10) of minute crystal grains formed on said gap forming faces; and
ferromagnetic thin films (11) of ferromagnetic metal material formed on said interposed thin films,
said ferromagnetic thin films having crystal grains grown directly from the surface of said interposed thin films.

2. A magnetic head according to claim 1, wherein
said ferromagnetic thin films (11) are polycrystalline substance including crystal grains having at least one of {110} face, {200} face and {211} face as a face approximately parallel to said gap forming faces.

3. A magnetic head according to claim 1, wherein
said ferromagnetic thin films (11) are polycrystalline substance including crystal grains (19) with (110} face, crystal grains (20) with {200} face and crystal grains (21) with {211} face as faces approximately parallel to said gap forming faces.

4. A magnetic head according to claim 1, wherein thickness of said interposed thin films (10) is not less than 1nm and not more than 1/10 of the thickness of said magnetic gap.

5. A magnetic head according to claim 1, wherein said minute crystal grains are formed of non-magnetic oxide.

6. A magnetic head according to claim 5, wherein said non-magnetic oxide comprises silicon oxide.

7. A magnetic head according to claim 6, wherein said ferromagnetic metal material comprises sendust.

8. A magnetic head according to claim 6, wherein said ferromagnetic oxide comprises ferrite.

## FIG.1

## FIG.2

FIG.3

FIG.4

FIG.5

FIG.6

# FIG.7

FIG.8A

FIG.8B

FIG.9A

FIG.9B

# FIG.10A

# FIG.10B

# FIG.11

# FIG.12

SENDUST FILM THICKNESS

(A)  1 μm

(B)  500 Å

(C)  200 Å

EP 0 378 214 A1

## FIG.13

SENDUST FILM THICKNESS

(A)   1 μm

(B)   500 Å

(C)   200 Å

{110}

(A)

(B)

(C)

X-RAY INTENSITY

20          40  44.6     60          80      90

ANGLE 2θ (deg)

## FIG.14

19  20

21

11

23

10

17

## FIG.15

19

23

22

22a

17

EP 0 378 214 A1

## FIG.16

REPRODUCED OUTPUT

5dB

FREQUENCY (MHz)

## FIG.17

REPRODUCED OUTPUT

5dB

FREQUENCY (MHz)

FIG.18

500Å

100 μm

FIG.19

500Å

100 μm

EP 0 378 214 A1

| | DOCUMENTS CONSIDERED TO BE RELEVANT | | EP 90100529.8 |
|---|---|---|---|
| Category | Citation of document with indication, where appropriate, of relevant passages | Relevant to claim | CLASSIFICATION OF THE APPLICATION (Int Cl⁵) |
| Y | PATENT ABSTRACTS OF JAPAN, unexamined applications, P field, vol. 10, no. 243, August 21, 1986 THE PATENT OFFICE JAPANESE GOVERNMENT page 44 P 489 * Kokai-no. 61-73 213 (SANYO ELECTRIC CO LTD) * -- | 1 | G 11 B 5/23 G 11 B 5/235 G 11 B 5/139 G 11 B 5/127 |
| Y | PATENT ABSTRACTS OF JAPAN, unexamined applications, P field, vol. 10, no. 190, July 4, 1986 THE PATENT OFFICE JAPANESE GOVERNMENT page 34 P 474 * Kokai-no. 61-34 707 (HITACHI LTD) * -- | 1 | |
| Y | PATENT ABSTRACTS OF JAPAN, unexamined applications, P field, vol. 11, no. 151, May 16, 1987 THE PATENT OFFICE JAPANESE GOVERNMENT page 161 P 576 * Kokai-no. 61-287 015 (HITACHI LTD) * -- | 1 | TECHNICAL FIELDS SEARCHED (Int Cl⁵) G 11 B 5/00 H 01 F 1/00 H 01 F 3/00 H 01 F 10/00 |
| Y | PATENT ABSTRACTS OF JAPAN, unexamined applications, P field, vol. 11, no. 32, January 30, 1987 THE PATENT OFFICE JAPANESE GOVERNMENT page 122 P 541 * Kokai-no. 61-202 310 (HITACHI METALS LTD) * ---- | 1 | |

The present search report has been drawn up for all claims

| Place of search | Date of completion of the search | Examiner |
|---|---|---|
| VIENNA | 09-03-1990 | BERGER |